# FASCICULE DE BREVET EUROPEEN

(11) **EP 2 156 991 B1**
(45) Date de publication et mention de la délivrance du brevet: **25.05.2011**
(21) Numéro de dépôt: 09305737.0
(22) Date de dépôt: 06.08.2009
(51) Int. Cl.: B60R 19/38

(54) **Dispositif actif d'absorption d'énergie pour un véhicule automobile et véhicule automobile équipé d'un tel dispositif**
Aktive Vorrichtung zur Energieabsorption für ein Kraftfahrzeug und mit einer solchen Vorrichtung ausgestattetes Kraftfahrzeug
Active energy-absorbing device for an automobile and automobile equipped with such a device

(30) Priorité: 19.08.2008 FR 0855627
(43) Date de publication de la demande: 24.02.2010
(73) Titulaire: Faurecia Bloc Avant, 92000 Nanterre (FR)
(72) Inventeur: Laurent, Claude, 25420, VOUJEAUCOURT (FR)
(74) Mandataire: Blot, Philippe Robert Emile

(56) Documents cités:
- EP-A- 1 470 966
- DE-A1- 3 915 387
- DE-A1- 10 031 526
- GB-A- 487 419
- GB-A- 2 441 316
- US-B1- 7 210 718

## Description

La présente invention concerne un dispositif d'absorption d'énergie pour un véhicule automobile, du type comportant une poutre transversale destinée à être solidaire d'un châssis du véhicule par fixation d'une face arrière de la poutre à des longerons gauche et droit du châssis ; et une ossature montée sur une face avant de la poutre transversale.

Un pare-chocs pour véhicule automobile comporte généralement un dispositif d'absorption d'énergie, du type précité, fixé au châssis du véhicule automobile et une peau de pare-chocs montée sur l'ossature et masquant le dispositif d'absorption d'énergie.

Il est connu, d'après le document FR 2 895 955 A1, un dispositif actif d'absorption d'énergie pour véhicule automobile, d'un type différent. Il comprend une poutre transversale reliée aux longerons droit et gauche du châssis d'un véhicule par l'intermédiaire d'éléments déformables d'absorption d'énergie. Une face avant de la poutre est recouverte par une structure absorbante. La poutre est apte à pivoter, autour d'un axe longitudinal de la poutre, entre une première position dans laquelle une première portion de la structure absorbante ayant une première raideur, relativement faible, est alignée avec la direction longitudinale du véhicule, et une deuxième position dans laquelle une seconde portion de la structure absorbante ayant une deuxième raideur, plus élevée que la première, est alignée avec la direction longitudinale du véhicule.

La poutre transversale reliant les extrémités des longerons participe à la sécurité des passagers du véhicule en cas de chocs. En effet, elle assure une certaine cohésion entre les parties droite et gauche du châssis dans tous les cas de chocs, chocs frontaux ou chocs à angle. On notera que, selon la norme actuellement en vigueur, un choc dit « réparabilité » est réalisé alors que le véhicule a une vitesse relative par rapport à un obstacle de 15 km/h et avec un angle de 10°. Ainsi, un choc « réparabilité » est un type de chocs à angle.

Or, la poutre précédente ne permet pas de satisfaire pleinement les normes sur le plan de la cohésion du véhicule. En effet, les moyens de liaison entre la poutre et les éléments déformables d'absorption d'énergie étant relativement fragiles, non seulement la capacité de pivotement de la poutre après un choc n'est pas garantie compte tenu des niveaux d'efforts qui peuvent déformés ces moyens de liaison, mais encore, lors du choc, la poutre a de grandes chances d'être arrachée et la cohésion de la caisse de n'être, par conséquent, plus assurée.

Par ailleurs, ce dispositif actif connu manque de compacité, demande de l'espace libre à l'avant du véhicule et présente une masse importante, supérieure à la masse des pare-chocs passifs existants.

L'invention a pour but de pallier ces problèmes.

L'invention a pour objet un dispositif d'absorption d'énergie du type précité, comportant, en outre :
- au moins deux éléments déformables d'absorption d'énergie logés entre l'ossature et la face avant de la poutre et destinés à être situés au droit de chacun des longerons du châssis, chaque élément déformable d'absorption d'énergie présentant une première rigidité selon une première direction et une seconde rigidité, différente de la première rigidité, selon une seconde direction ; et,
- un moyen d'actionnement apte à orienter lesdits éléments déformables d'absorption d'énergie pour aligner la première direction ou la seconde direction avec un axe de référence,
le dispositif d'absorption d'énergie étant actif.

Suivant des modes particuliers de l'invention, le dispositif d'absorption d'énergie comporte une ou plusieurs des caractéristiques suivantes, prise(s) isolément ou suivant toutes les combinaisons techniquement possibles :
- ledit axe de référence coïncide avec un axe longitudinal X du véhicule sur lequel est monté ledit dispositif ;
- chacun desdits éléments déformables d'absorption d'énergie a la forme d'un cylindre apte à être orienté par pivotement autour de son axe A, B, et reçu dans un logement ménagé sur une face arrière de l'ossature ;
- chacun desdits éléments déformables d'absorption d'énergie comporte un matériau alvéolaire du type en nid d'abeille ;
- chacun desdits éléments déformables d'absorption d'énergie comporte un carter dans lequel est inséré ledit matériau alvéolaire ;
- les première et seconde directions D1, D2 de chacun des éléments déformables d'absorption d'énergie définissent un plan disposé sensiblement verticalement en position monté dudit dispositif sur le châssis ;
- les première et seconde directions D1, D2 de chacun des éléments déformables d'absorption d'énergie définissent un plan disposé sensiblement horizontalement en position monté dudit dispositif sur le châssis ;
- ledit moyen d'actionnement est apte à orienter lesdits éléments déformables d'absorption d'énergie en réponse à un signal électrique de détection de choc.

L'invention a également pour objet un véhicule automobile comportant un châssis ayant deux longerons parallèles suivant un axe longitudinal, et un pare-chocs comportant un dispositif d'absorption d'énergie, tel que celui présenté ci-dessus, monté sur lesdits longerons du châssis et une peau de pare-chocs portée par ledit dispositif.

L'invention et ses avantages seront mieux compris à la lecture de la description qui va suivre, donnée uniquement à titre d'exemple, et faite en se référant aux dessins annexés, dans lesquels :
- la figure 1 est une vue schématique, en perspective, d'un premier mode de réalisation du dispositif suivant l'invention, une portion supérieure de l'ossature ayant été retirée pour rendre visible des éléments déformables d'absorption d'énergie ;
- la figure 2 est une vue, similaire à celle de la figure 1, illustrant un second mode de réalisation du dispositif suivant l'invention.

Les figures sont orientées au moyen d'un repère orthogonal X, Y, Z correspondant à celui du véhicule automobile sur lequel le dispositif d'absorption d'énergie doit être finalement monté. L'axe X correspond à l'axe longitudinal du véhicule, orienté de l'arrière vers l'avant du véhicule, l'axe Y correspond à l'axe transversal du véhicule, et l'axe Z correspond à un axe sensiblement vertical.

Un châssis 2 du véhicule automobile comporte deux longerons parallèles, droit 4 et gauche 6, s'étendant suivant l'axe longitudinal X.

L'extrémité avant du longeron droit 4, respectivement du longeron gauche 6, comporte une platine 8, respectivement 10, de fixation d'un dispositif d'absorption d'énergie 12 d'un pare-chocs avant. Chaque platine 8, 10 est rectangulaire et est disposée perpendiculairement à l'axe longitudinal X. Les platines 8 et 10 comportent des moyens de fixation aptes à coopérer avec des moyens de fixation conjugués équipant le dispositif d'absorption d'énergie 12.

Le dispositif d'absorption d'énergie 12 comporte une poutre transversale 14, solidaire des longerons 4 et 6 du châssis 2, une ossature 16 fixée sur la poutre 14 et deux éléments déformables d'absorption d'énergie, respectivement droit 18 et gauche 20, disposés dans le volume délimité par une face avant de la poutre 14 et l'ossature 16.

La poutre transversale 14 est une plaque métallique rigide, rectangulaire de hauteur h, fixée par sa face arrière 21 aux platines 8 et 10 des longerons 4 et 6. La poutre 14 est par exemple équipée de tiges filetées 22 qui s'insèrent dans des trous 24 ménagés dans les platines 8 et 10. Pour finaliser la fixation de la poutre 14, des écrous de serrage sont vissés aux extrémités libres des tiges 22 puis serrer pour solidariser la poutre 14 sur les platines 8 et 10. Ainsi solidarisée au châssis 2, la poutre 14 assure la cohésion de la caisse du véhicule en cas de chocs à haute vitesse.

Le dispositif d'absorption d'énergie 12 comporte également une ossature 16 qui sert de support à une peau de pare-chocs (non représentée) et de moyen d'absorption des chocs de faible et de moyenne énergie, tels que des chocs « piéton » et des chocs « réparabilité ». L'ossature 16 est fixée sur une face avant 25 de la poutre 14, par exemple par des moyens de fixation clipables. L'ossature 16 présente une face avant 26, de préférence conformante à la surface extérieure du véhicule, et une face arrière 28, sensiblement normale à l'axe longitudinal X. Intérieurement, l'ossature 16 comporte des nervures de renfort 30 verticales s'étendant entre les faces avant 26 et arrière 28 de l'ossature et délimitant des caissons 31. L'ossature 16 est de préférence réalisée en une matière plastique rigide.

L'ossature 16 présente, sur sa face arrière 28, en regard de la face avant 25 de la poutre 14, des logements droit 32 et gauche 34 de réception des éléments déformables d'absorption d'énergie 18 et 20 qui vont maintenant être décrits en détail

Chaque élément déformable d'absorption d'énergie 18, respectivement 20, est apte à absorber une fraction de l'énergie d'un choc par écrasement selon son épaisseur. Un élément déformable 18, 20, comporte un bloc en un matériau alvéolaire en nid d'abeille, par exemple en aluminium. De manière générale, un matériau alvéolaire présente l'avantage d'avoir un rendement d'absorption d'énergie par écrasement très élevé. Compte tenu de l'existence de nombreuses arêtes qui sont dues à la découpe du matériau alvéolaire et qui pourraient nuire à la rotation correcte du bloc de matériau alvéolaire, celui-ci est avantageusement inséré dans un carter. Un élément déformable 18, 20, comporte donc, extérieurement, un carter cylindrique 19 d'axe A, B, et de hauteur sensiblement égale à la hauteur h de la poutre 14. Le carter 19 est de préférence réalisé en un matériau plastique rigide, apte à participer à la dissipation de l'énergie du choc.

Le matériau en nid d'abeille est un profilé dont la section selon un plan principal présente un motif constitué d'alvéoles hexagonales juxtaposées les unes aux autres. Le matériau en nid d'abeille présente au moins deux directions selon lesquelles la rigidité à l'écrasement du matériau est différente. Plus précisément, selon une première direction D1 parallèle au plan principal, le matériau en nid d'abeille possède une première rigidité, de valeur réduite, tandis que, selon une seconde direction D2 normale au plan principal, c'est-à-dire parallèlement à la longueur du profilé, le matériau en nid d'abeille a une seconde rigidité, de valeur élevée. Un facteur dix peut être atteint entre les rigidités caractéristiques du matériau en nid d'abeille selon les première et seconde directions. Les première et seconde directions D1 et D2 fond, dans le mode de réalisation décrit, un angle de 90° entre elles.

Un élément déformable d'absorption d'énergie 18, 20, est fabriqué de sorte que le plan principal, défini par les première et seconde directions D1 et D2 du matériau en nid d'abeille qu'il contient, soit perpendiculaire à l'axe A, B de l'élément déformable 18, 20 considéré.

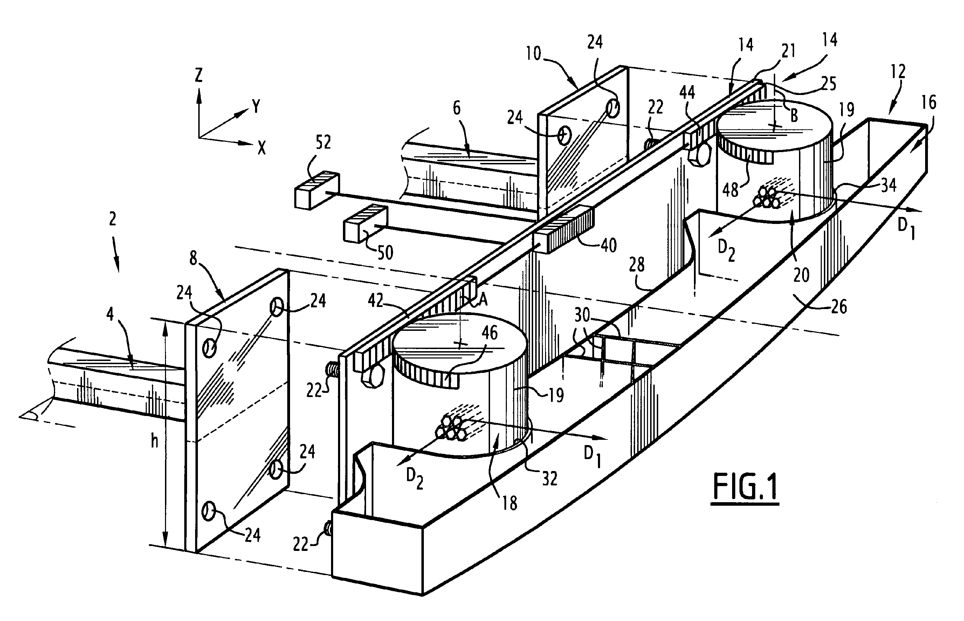

Dans le premier mode de réalisation représenté sur la figure 1, les éléments déformables 18 et 20 sont logés respectivement dans chacun des logements droit 32 et gauche 20 de l'ossature 16 de manière à ce que leur axe A, B sont parallèle à l'axe vertical Z.

Le dispositif d'absorption d'énergie 12 comporte enfin un moyen d'actionnement des éléments déformables d'absorption d'énergie 18, 20 permettant de les orienter pour régler la rigidité du dispositif d'absorption d'énergie 12. Ainsi, alors que les éléments déformables 18 et 20 se trouvent dans une première position pour laquelle la première direction D1 du matériau en nid d'abeille est alignée avec l'axe longitudinal X du véhicule, la rigidité du dispositif d'absorption d'énergie 12 est réduite, ce qui est adapté au cas d'un choc piéton. En revanche, alors que les éléments déformables 18 et 20 se trouvent dans une seconde position pour laquelle la seconde direction D2 du matériau en nid d'abeille est alignée avec l'axe longitudinal X du véhicule, la rigidité du dispositif d'absorption d'énergie 12 est plus importante, ce qui est adapté à tous les types de chocs, sauf les chocs « piéton ».

Le moyen d'actionnement comporte un moteur 40, en appui sur la poutre 14. Par exemple, le moteur 40 est fixé sur une face avant 25 ou sur une face latérale de la poutre 14. Cette dernière solution étant préférée, car le moteur 40 est moins exposé et risque moins d'être détérioré lors d'un choc de faible énergie. Le moteur 40 est alimenté par une batterie 50 en puissance électrique. Le moteur 40 est couplé aux éléments déformables 18 et 20 par des tiges dont les extrémités portent des crémaillères 42 et 44 engrenant des roues dentées 46, 48 prévues sur la surface latérale extérieure des carters des éléments déformables 18 et 20. Les roues dentées 46, 48 couvrent un arc de cercle dont l'ouverture est supérieure à 90° pour assurer le pivotement d'un élément déformable 18, 20 autour de son axe A, B d'au moins 90°, pour passer de la première position à la seconde position et inversement.

L'actionnement du moteur 40 est commandé par un signal électrique émis par un calculateur 52 embarqué à bord du véhicule. Le calculateur 52 est apte à déterminer l'imminence et la nature d'un choc, en fonction de paramètres dont les valeurs instantanées sont mesurées par différents capteurs reliés au calculateur 52. Le calculateur 52 élabore en réponse un signal électrique d'actionnement de l'orientation des éléments déformables 18 et 20. Par exemple, si la position par défaut des éléments déformables 18 et 20 est telle qu'ils présentent une rigidité élevée adaptée à tous les types de chocs sauf les chocs « piéton », le moyen d'actionnement commande le pivotement des éléments déformables 18 et 20 pour diminuer la rigidité du dispositif d'absorption d'énergie 12 lors de la détection d'un choc « piéton ».

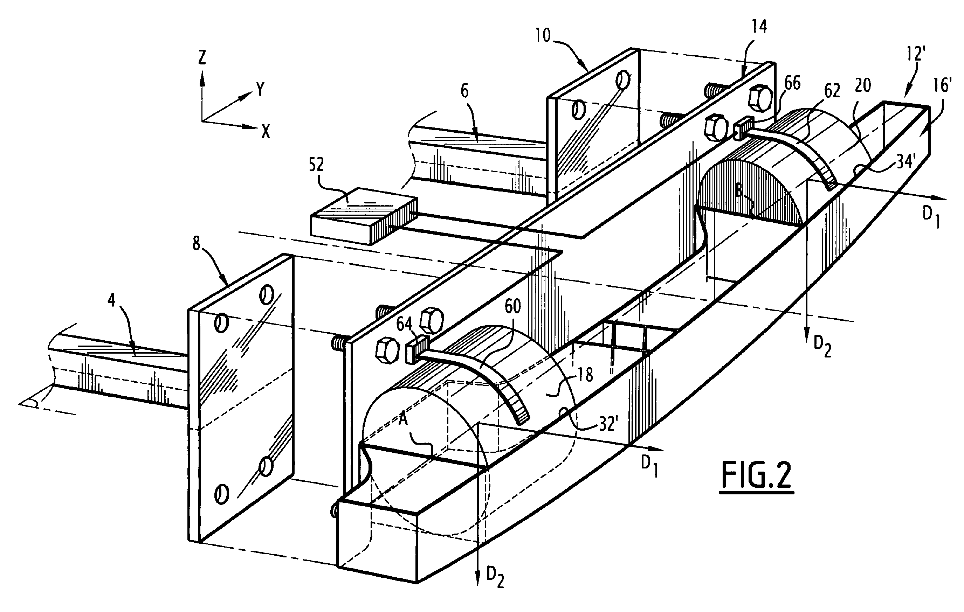

Pour le second mode de réalisation représenté sur la figure 2, les éléments de cette figure identiques à des éléments de la figure 1 portent la même référence, tandis que les éléments similaires à des éléments de la figure 1 portent des références primées.

Dans le second mode de réalisation de l'invention, représenté à la figure 2, les éléments déformables 18 et 20 sont positionnés de sorte que leur axes A et B sont parallèles à l'axe transversal Y. Les logements droit 32' et gauche 34' de l'ossature 16' sont conformés pour recevoir les éléments déformables 18 et 20 dans cette position.

Sur la figure 2, le moyen d'actionnement d'un élément déformable 18, respectivement 20, comporte un câble 60, 62, partiellement enroulé autour de la surface latérale extérieur du carter, dont une extrémité est fixée au carter et dont l'autre extrémité est couplée à un actionneur pyrotechnique 64, 65. Lors de la réception d'un signal électrique d'actionnement émis par le calculateur 52, l'actionneur pyrotechnique 64, 65 engendre le pivotement irréversible de l'élément déformable 18, 20 d'un angle prédéterminé.

L'homme du métier comprendra que la variante de réalisation du moyen d'actionnement décrite en référence au second mode de réalisation de la figure 2 peut être utilisée dans le mode de réalisation de la figure 1. D'autres variantes de réalisation du moyen d'actionnement sont envisageables.

Les éléments déformables d'absorption d'énergie ont un poids réduit, de l'ordre de 200 g. Ils sont par conséquent facilement et rapidement orientés pour parer à un choc. Ceci est à comparer au dispositif actif de l'art antérieur où le pivotement de la poutre nécessite un travail important.

## Revendications

1. Dispositif d'absorption d'énergie (12; 12') pour un véhicule automobile, comportant :
- une poutre transversale (14) d'absorption des chocs de haute énergie, destinée à être solidaire d'un châssis (2) du véhicule par fixation d'une face arrière (21) de la poutre à des longerons gauche (6) et droit (4) du châssis; et,
- une ossature (16, 16') d'absorption des chocs de faible énergie, fixée sur une face avant (25) de la poutre transversale,
**caractérisé en ce qu'**il comporte, en outre :
- au moins deux éléments déformables d'absorption d'énergie (18, 20) logés entre l'ossature et la face avant de la poutre et destinés à être situés au droit de chacun des longerons du châssis, chaque élément déformable d'absorption d'énergie présentant une première rigidité selon une première direction (D1) et une seconde rigidité, différente de la première rigidité, selon une seconde direction (D2) ; et,
- un moyen d'actionnement (40, 42, 44, 46, 48 ; 60, 62, 64, 66) apte à orienter lesdits éléments déformables d'absorption d'énergie pour aligner la première direction ou la seconde direction avec un axe de référence (X),
ledit dispositif d'absorption d'énergie étant actif.

2. Dispositif selon la revendication 1 ou la revendication 2, **caractérisé en ce que** ledit axe de référence coïncide avec un axe longitudinal (X) du véhicule sur lequel est monté ledit dispositif (12 ; 12').

3. Dispositif selon l'une quelconque des revendications précédentes, **caractérisé en ce que** chacun desdits éléments déformables d'absorption d'énergie (18, 20) a la forme d'un cylindre apte à être orienté par pivotement autour de son axe (A, B), et reçu dans un logement (32, 34 ; 32', 34') ménagé sur une face arrière (28) de l'ossature (16 ; 16').

4. Dispositif selon l'une quelconque des revendications précédentes, **caractérisé en ce que** chacun desdits éléments déformables d'absorption d'énergie (18, 20) comporte un matériau alvéolaire du type en nid d'abeille.

5. Dispositif selon la revendication 4, **caractérisé en ce que** chacun desdits éléments déformables d'absorption d'énergie (18, 20) comporte un carter (19) dans lequel est inséré ledit matériau alvéolaire.

6. Dispositif (12') selon l'une quelconque des revendications 1 à 5, **caractérisé en ce que** les première et seconde directions (D1, D2) de chacun des éléments déformables d'absorption d'énergie (18, 20) définissent un plan disposé sensiblement verticalement en position monté dudit dispositif sur le châssis.

7. Dispositif (12) selon l'une quelconque des revendications 1 à 5, **caractérisé en ce que** les première et seconde directions (D1, D2) de chacun des éléments déformables d'absorption d'énergie (18, 20) définissent un plan disposé sensiblement horizontalement en position monté dudit dispositif sur le châssis.

8. Dispositif selon l'une quelconque des revendications précédentes, **caractérisé en ce que** ledit moyen d'actionnement est apte à orienter lesdits éléments déformables d'absorption d'énergie (18, 20) en réponse à un signal électrique de détection de choc.

9. Véhicule automobile comportant un châssis (2) ayant deux longerons (4, 6) parallèles suivant un axe longitudinal (X), et un pare-chocs comportant un dispositif d'absorption d'énergie (15, 12') monté sur lesdits longerons du châssis et une peau de pare-chocs portée par ledit dispositif, **caractérisé en ce que** ledit dispositif est un dispositif d'absorption d'énergie actif selon l'une quelconque des revendications 1 à 8.

## Claims

1. Energy-absorbing device (12; 12') for an automotive vehicle, comprising:
- a transverse beam (14) for absorbing high-energy impacts which is intended to be integral with a chassis (2) of the vehicle by fixing a rear face (21) of the beam to left (6) and right (4) side members of the chassis; and
- a frame (16, 16') for absorbing low-energy impacts which is fixed on a front face (25) of the transverse beam,
**characterised in that** it comprises furthermore:
- at least two deformable energy-absorbing elements (18, 20) which are housed between the frame and the front face of the beam and are intended to be situated to the right of each of the side members of the chassis, each deformable energy-absorbing element having a first rigidity according to a first direction (D1) and a second rigidity, different from the first rigidity, according to a second direction (D2); and
- control means (40, 42, 44, 46, 48; 60, 62, 64, 66) which are able to orientate said deformable energy-absorbing elements in order to align the first direction or the second direction with a reference axis (X), said energy-absorbing device being active.

2. Device according to claim 1 or claim 2, **characterised in that** said reference axis coincides with a longitudinal axis (X) of the vehicle on which said device (12; 12') is mounted.

3. Device according to any of the preceding claims, **characterised in that** each of said deformable energy-absorbing elements (18, 20) has the form of a cylinder which is able to be orientated by pivoting about the axis (A, B) thereof and received in a housing (32, 34; 32', 34') which is provided on a rear face (28) of the frame (16; 16').

4. Device according to any of the preceding claims, **characterised in that** each of said deformable energy-absorbing elements (18, 20) comprises an alveolar material of the honeycomb type.

5. Device according to claim 4, **characterised in that** each of said deformable energy-absorbing elements (18, 20) comprises a casing (19) in which said alveolar material is inserted.

6. Device (12') according to any of the claims 1 to 5, **characterised in that** the first and second directions (D1, D2) of each of the deformable energy-absorbing elements (18, 20) define a plane which is disposed substantially vertically in the mounted position of said device on the chassis.

7. Device (12) according to any of the claims 1 to 5, **characterised in that** the first and second directions (D1, D2) of each of the deformable energy-absorbing elements (18, 20) define a plane which is disposed substantially horizontally in the mounted position of said device on the chassis.

8. Device according to any of the preceding claims, **characterised in that** said control means is able to orientate said deformable energy-absorbing elements (18, 20) in response to an electrical impact-detection signal.

9. Automotive vehicle comprising a chassis (2) having two parallel side members (4, 6) according to a longitudinal axis (X) and a bumper comprising an energy-absorbing device (15, 12') which is mounted on said side members of the chassis and a bumper skin carried by said device, **characterised in that** said device is an active energy-absorbing device according to any of the claims 1 to 8.

## Patentansprüche

1. Energieabsorptionsvorrichtung (12; 12') für ein Kraftfahrzeug, die umfasst:
- einen Querträger (14) für die Absorption von Stößen hoher Energie, der dazu bestimmt ist, mit einem Rahmen (2) des Fahrzeugs durch Befestigen einer hinteren Fläche (21) des Trägers an einem linken Längsträger (6) und einem rechten Längsträger (4) des Rahmens fest verbunden zu werden; und
- eine Tragkonstruktion (16, 16') für die Absorption von Stößen niedriger Energie, die an einer vorderen Fläche (25) des Querträgers befestigt ist,
**dadurch gekennzeichnet, dass** sie außerdem umfasst:
- wenigstens zwei verformbare Energieabsorptionselemente (18, 20), die sich zwischen der Tragkonstruktion und der vorderen Fläche des Trägers befinden und dazu vorgesehen sind, jeweils am Ort jedes der Längsträger des Rahmens angeordnet zu sein, wobei jedes verformbare Energieabsorptionselement in einer ersten Richtung (D1) eine erste Steifigkeit und in einer zweiten Richtung (D2) eine von der ersten Steifigkeit verschiedene zweite Steifigkeit aufweist; und
- ein Betätigungsmittel (40, 42, 44, 46, 48; 60, 62, 64, 66), das dazu ausgelegt ist, die verformbaren Energieabsorptionselemente zu orientieren, um die erste Richtung oder die zweite Richtung auf eine Bezugsachse (X) auszurichten,
wobei die Energieabsorptionsvorrichtung aktiv ist.

2. Vorrichtung nach Anspruch 1 oder Anspruch 2, **dadurch gekennzeichnet, dass** die Bezugsachse mit einer Längsachse (X) des Fahrzeugs, in dem die Vorrichtung (12; 12') montiert ist, zusammenfällt.

3. Vorrichtung nach einem der vorhergehenden Ansprüche, **dadurch gekennzeichnet, dass** jedes der verformbaren Energieabsorptionselemente (18, 20) die Form eines Zylinders hat, der durch Schwenken um seine Achse (A, B) orientiert werden kann und in einem Aufnahmesitz (32, 34; 32', 34'), der in einer hinteren Fläche (28) der Tragkonstruktion (16; 16') ausgebildet ist, orientiert werden kann.

4. Vorrichtung nach einem der vorhergehenden Ansprüche, **dadurch gekennzeichnet, dass** jedes der verformbaren Energieabsorptionselemente (18, 20) ein zelliges Material des Wabentyps aufweist.

5. Vorrichtung nach Anspruch 4, **dadurch gekennzeichnet, dass** jedes der verformbaren Energieabsorptionselemente (18, 20) einen Kasten (19) aufweist, in den das zellige Material eingesetzt ist.

6. Vorrichtung (12') nach einem der Ansprüche 1 bis 5, **dadurch gekennzeichnet, dass** die erste und die zweite Richtung (D1, D2) jedes der verformbaren Energieabsorptionselemente (18, 20) eine Ebene definieren, die in der montierten Stellung der Vorrichtung am Rahmen im Wesentlichen vertikal angeordnet ist.

7. Vorrichtung (12) nach einem der Ansprüche 1 bis 5, **dadurch gekennzeichnet, dass** die erste und die zweite Richtung (D1, D2) jedes der verformbaren Energieabsorptionselemente (18, 20) eine Ebene definieren, die in der montierten Stellung der Vorrichtung am Rahmen im Wesentlichen horizontal angeordnet ist.

8. Vorrichtung nach einem der vorhergehenden Ansprüche, **dadurch gekennzeichnet, dass** das Betätigungsmittel die verformbaren Energieabsorptionselemente (18, 20) in Reaktion auf ein elektrisches Stoßdetektionssignal orientieren kann.

9. Kraftfahrzeug, das einen Rahmen (2) mit zwei parallelen Längsträgern (4, 6) in Richtung einer Längsachse (X) und einen Stoßfänger, der eine an den Längsträgern des Rahmens montierte Energieabsorptionsvorrichtung (15, 12') und eine von dieser Vorrichtung getragene Stoßfängerhaut aufweist, besitzt, **dadurch gekennzeichnet, dass** die Vorrichtung eine aktive Energieabsorptionsvorrichtung nach einem der Ansprüche 1 bis 8 ist.
